# EUROPÄISCHE PATENTANMELDUNG

(11) **EP 3 696 066 A1**
(43) Veröffentlichungstag der Anmeldung: **19.08.2020**
(21) Anmeldenummer: 20156782.3
(22) Anmeldetag: 12.02.2020
(51) Int. Cl.: B62M 6/40, B62J 6/028, B62J 6/04, B62M 6/90

(54) **VERFAHREN UND VORRICHTUNG ZUR STEUERUNG EINES BELEUCHTUNGSELEMENTS**

(30) Priorität: 12.02.2019 DE 102019201782
(71) Anmelder: Robert Bosch GmbH, 70442 Stuttgart (DE)
(72) Erfinder: Friese, Andreas, 72285 Pfalzgrafenweiler (DE)

(57) **Zusammenfassung**

Mit der vorliegenden Erfindung soll eine Vorrichtung und ein Verfahren zur Verfügung gestellt werden, welche bzw. welches eine Reduzierung der Betriebsleistung wenigstens eines Beleuchtungselements (120) an einem Elektrofahrrad ohne eine Verkürzung der notwendigen Betriebsdauer ermöglicht. Hierzu erfasst die Vorrichtung beziehungsweise das Verfahren zunächst eine Betriebsinformation des wenigstens einen Beleuchtungselements (120). Weiterhin wird eine Abschaltinformation erfasst, die entweder direkt oder indirekt die Abschaltung des Antriebs (140) eines Elektrofahrrads repräsentiert. Dabei ist insbesondere vorgesehen, dass die Abschaltinformation eine Abschaltung des Antriebs (140) aufgrund einer zu geringen Akkumulatorkapazität repräsentiert. Der Kern der Erfindung besteht dabei darin, dass in Abhängigkeit beider erfasster Daten, d.h. der Betriebsinformation als auch der Abschaltinformation eine Reduzierung der Betriebsleistung des Beleuchtungselements (120) vorgenommen wird.

## Beschreibung

Die Erfindung betrifft ein Verfahren sowie eine Vorrichtung zur Steuerung eines Leuchtmittels eines Elektrofahrrads.

### Stand der Technik

Bei der Verwendung der Energieversorgung eines Elektrofahrrads für den Betrieb der Beleuchtung ist dafür Sorge zu tragen, dass diese Beleuchtung eine Mindestdauer nach dem Abschalten des Antriebs betrieben werden kann. So ist in Deutschland erforderlich, dass aus einem Akkumulator für den Antrieb gespeiste Scheinwerfer von Pedelecs und E-Bikes noch zwei Stunden funktionieren müssen, nachdem der Antrieb wegen zu niedrigem Ladestands abgeschaltet worden ist. Ausnahmen bestehen hier nur, wenn der Antriebsmotor als Dynamo zum Betrieb des Scheinwerfers genutzt werden kann bzw. eine vom Akkumulator des Antriebs unabhängige Energiequelle für den Scheinwerfer verwendet wird.

Durch die Verwendung immer leuchtintensiver Scheinwerfer und Lampen an den Elektrofahrrädern stellt diese Bereitstellung einer Restenergie für die Beleuchtung eine tatsächliche Einschränkung der Reichweite von Elektrofahrrädern dar.

Die Aufgabe der Erfindung besteht dabei darin, die Ansteuerung der Beleuchtung an einem Elektrofahrrad bzw. einem elektrisch betreibbaren Zweirad dahingehend zu optimieren, dass eine höhere Reichweite bei gleichzeitiger Sicherstellung der gesetzlichen Vorgaben ermöglicht wird.

### Offenbarung der Erfindung

Mit der vorliegenden Erfindung soll eine Vorrichtung und ein Verfahren zur Verfügung gestellt werden, welche bzw. welches eine Reduzierung der Betriebsleistung wenigstens eines Beleuchtungselements an einem Elektrofahrrad ohne eine Verkürzung der notwendigen Betriebsdauer ermöglicht. Hierzu erfasst die Vorrichtung beziehungsweise das Verfahren zunächst wenigstens eine Betriebsinformation des wenigstens einen Beleuchtungselements. Weiterhin wird eine Abschaltinformation erfasst, die entweder direkt oder indirekt die Abschaltung des Antriebs eines Elektrofahrrads repräsentiert. Dabei ist insbesondere vorgesehen, dass die Abschaltinformation eine Abschaltung des Antriebs aufgrund einer zu geringen Akkumulatorkapazität repräsentiert. Der Kern der Erfindung besteht dabei darin, dass in Abhängigkeit beider erfasster Daten, d.h. der Betriebsinformation als auch der Abschaltinformation eine Reduzierung der Betriebsleistung des Beleuchtungselements vorgenommen wird.

Der Vorteil einer derartigen Reduzierung der Betriebsleistung des wenigstens einen Beleuchtungselements liegt darin, dass eine Erhöhung der Leuchtdauer des Beleuchtungselements und/oder der Antriebszeit des Antriebs des Elektrofahrrads mit der Restenergie der Energiequelle/des Energiespeichers des Elektrofahrrads erreicht werden kann.

In einer weiteren Ausgestaltung der Erfindung ist vorgesehen, dass die Abschaltinformation, die zur Reduzierung der Betriebsleistung des Beleuchtungselements führt, dann erzeugt wird, wenn die Restenergie des Energiespeichers nur noch dazu ausreicht, das Beleuchtungselement eine vorgebbare oder vorgegebene Zeitdauer mit einer reduzierten Betriebsleistung zu betreiben. Hierbei kann vorgesehen sein, dass diese vorgegebene Zeitdauer einem Betrieb von beispielsweise zwei Stunden beträgt (entsprechend der aktuellen Vorgabe in Deutschland). Es kann jedoch auch vorgesehen sein, für die Zeitdauer einen anderen Wert als zwei Stunden vorzugeben, z.B. in Abhängigkeit der jeweiligen gesetzlichen Vorgaben. So kann auch eine Verlängerung der zwei Stunden ohne entsprechende gesetzliche Anforderung vorgesehen sein, um die Sicherheit des Fahrers zu erhöhen. Zur Ableitung der Restenergie des Energiespeichers kann die Ladekapazität des Energiespeichers erfasst und herangezogen werden.

Die Reduzierung der Betriebsleistung kann auf unterschiedliche Art erfolgen. Die Art der Reduzierung kann dabei von den Betriebsinformationen des Beleuchtungselements abhängen, indem zunächst erfasst wird, welche Ansteuerung und welcher Betriebsmodus von dem Beleuchtungselement unterstützt wird. Darüber hinaus kann bei der Wahl des Ansteuermodus zur Reduzierung der Betriebsleistung auch eine Vorgabe des Fahrers des Elektrofahrrads eine Rolle spielen.

In einer ersten Ausgestaltung wird das wenigstens eine Beleuchtungselement mit einer konstanten gegenüber dem Normalbetrieb reduzierten Betriebsleistung betrieben. Hierbei verringert sich bei einem entsprechenden Beleuchtungselement die gesamte Leuchtkraft.

In einer zweiten Ausgestaltung wird die Betriebsleistung rampenförmig beziehungsweise linear heruntergefahren, insbesondere auf einen niedrigeren Endwert, der noch eine Leuchttätigkeit ermöglicht.

In einer dritten Ausgestaltung ist vorgesehen, dass das wenigstens eine Beleuchtungselement wenigstens zwei Leuchtmittel aufweist, die unabhängig voneinander angesteuert und betrieben werden können. Dabei wird wenigstens eines der Leuchtmittel weiterhin angesteuert, während wenigstens ein anderes Leuchtmittel nicht mehr betrieben wird. Durch den nur noch teilweise Betrieb der Leuchtmittel reduziert sich ebenfalls die Betriebsleistung.

In einer vierten Ausgestaltung kann vorgesehen sein, zwei oder alle drei vorherigen Verfahren miteinander zu kombinieren, z.B. indem eine gestufte Reduzierung stattfindet. So ist denkbar, zunächst eine konstante niedrigere Betriebsleistung für das gesamte Beleuchtungselement vorzusehen, welche nach einiger Zeit, z.B. einer Stunde, weiter abgesenkt wird. Um weitere Energie zu sparen bzw. die Leuchtdauer weiter auszudehnen können im Anschluss einzelne Leuchtmittel des Beleuchtungselements abgeschalten werden.

Indem durch das erfindungsgemäße Verfahren bzw. die dabei verwendete Vorrichtung im zeitlichen Mittel Energie beim Betrieb des Beleuchtungselements eingespart wird, kann der Antrieb über den ursprünglich vorgesehenen Zeitpunkt hinaus betrieben werden. Der Vorteil liegt dabei darin, dass der Fahrer mit dem Elektrofahrrad eine Reichweitenerhöhung erfährt, ohne dass die Vorgabe hinsichtlich der Leichtdauer des Beleuchtungselements unterschritten wird.

Weiterhin kann vorgesehen sein, dass der Fahrer den Absolut- und/oder Relativbetrag der Reduzierung der Betriebsleistung des Beleuchtungselements definieren kann. Zusätzlich oder optional ist vorgesehen, dass der Fahrer die Leuchtdauer des Beleuchtungselements über die Abschaltung des Antriebs hinaus vorgeben kann, wobei hierbei insbesondere eine Verlängerung der gesetzlich vorgegebenen Leuchtdauer in Betracht kommt. Weiterhin ist möglich, dass der Fahrer die Zeitdauer angibt, in der die Betriebsleistung auf einen niedrigeren konstanten Wert gehalten wird. Die individuelle Vorgabe des Fahrers kann jedoch eine Reduzierung der maximalen Reichweite durch den Antrieb des Elektrofahrrads nach sich ziehen.

Weitere Vorteile ergeben sich aus der nachfolgenden Beschreibung von Ausführungsbeispielen bzw. aus den abhängigen Patentansprüchen.

### Kurze Beschreibung der Zeichnungen

In den Diagrammen der Figuren 1a bis c wird die Auswirkung der erfindungsgemäßen Ansteuerung der Beleuchtung eines Elektrofahrrads anschaulich beschrieben. Das Blockschaltbild der Figur 2 zeigt eine mögliche Realisierung der Erfindung in einer Vorrichtung. Das Flussdiagramm der Figur 3 beschreibt ein Abstimmungsverfahren zur Festlegung des erfindungsgemäßen Betriebs der Beleuchtung. Mit dem Flussdiagramm der Figur 4 wird die erfindungsgemäße Ansteuerung der Beleuchtung beschrieben.

### Ausführungsformen der Erfindung

Die Verwendung hochwertiger und leuchtstarker Scheinwerfer und Lampen an Fahrrädern und insbesondere Elektrofahrräder erhöht sowohl die Sicherheit des Fahrers hinsichtlich der Sichtbarkeit im Straßenverkehr als auch die Sicht auf die vorausliegende Fahrbahn in der Dunkelheit. Da zum Betrieb derartiger hochwertiger Beleuchtungen zunehmend höhere Anschlussleistungen erforderlich sind, ist eine entsprechende Energieversorgung notwendig. Bei elektrisch angetriebenen Fahrzeugen, insbesondere Elektrofahrrädern, bietet es sich daher an, die ohnehin für den Antrieb vorhandene Energiequelle im Elektrofahrrad in Form eines Akkumulators oder einer Batterie für die Versorgung der Beleuchtung zu verwenden. Wie eingangs jedoch bereits ausgeführt, sind mit einer derartigen elektrischen Versorgung aus dem für den Antrieb vorgesehenen Energiespeicher regional gesetzliche Vorgaben verknüpft, die den Betrieb und insbesondere die Reichweite des Fahrzeugs einschränken. So ist bei einer in Deutschland derzeit geforderten erforderlichen zweistündigen Weiterversorgung eines leuchtstarken Scheinwerfers (z.B. mit mehr als 10 W) nach der entladungsbedingten Abschaltung des Antriebs eine erhebliche Reduzierung der Restreichweite zu erwarten. Generell erhöht eine gewisse Weiterversorgung des Scheinwerfers die Sicherheit und ist auch ohne gesetzliche Vorgaben sinnvoll.

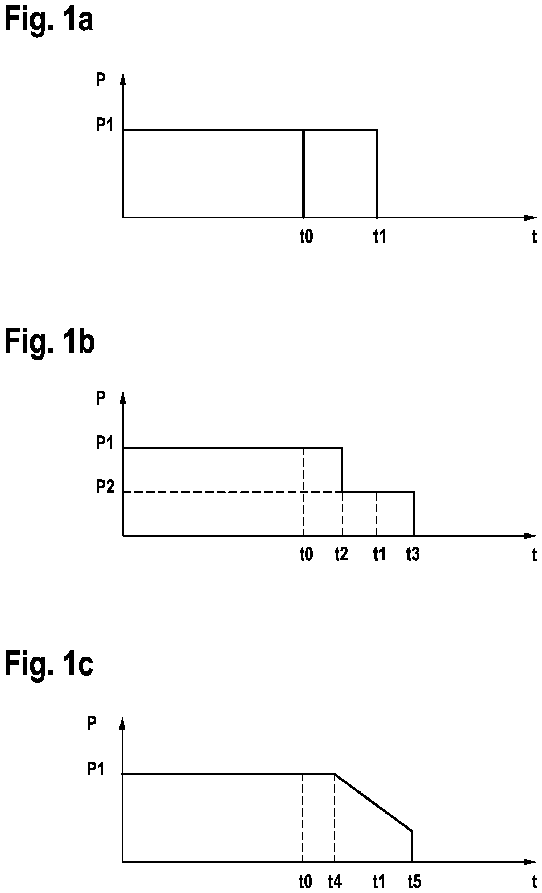

Die gesetzliche Vorgabe hinsichtlich der Sicherung einer vorgegeben Zeitdauer in der die Beleuchtung noch versorgt werden muss betrifft jedoch nicht die Leuchtstärke. Aus diesem Grund wird gemäß der vorliegenden Erfindung eine Vorrichtung und eine Verfahren vorgeschlagen, um die Beleuchtung nach einem Abschalten des Antriebs aufgrund geringer Restenergiemenge im Energiespeicher mit einer reduzierten Leistung und somit mit einer reduzierten Leuchtstärke zu betreiben. Zwei mögliche Betriebsvarianten sollen im nachfolgenden anhand der Figuren 1a) bis c) beschrieben werden.

Figur 1a beschreibt eine Situation, in der zum Zeitpunkt t0 der Antrieb/Motor des Elektrofahrrads abgeschaltet wird, da die Restenergiemenge im Energiespeicher nur noch für eine festgelegte Betriebsdauer, z.B. einem zweistündigen Betrieb, der Beleuchtung bis zum Zeitpunkt t1 ausreicht. Hierbei wird eine unveränderte Betriebsleistung der Beleuchtung von P1 angenommen.

Statt die Beleuchtung mit einer unveränderten Betriebsleistung von P1 zu versorgen, ist in einem ersten Ausführungsbeispiel der Erfindung gemäß der Figur 1b vorgesehen, die Betriebsleistung auf einen niedrigeren zweiten Wert P2 zu reduzieren. Durch diese vorgesehene reduzierte Betriebsleistung der Beleuchtung kann der Antrieb/Motor des Elektrofahrrads bis zu einem nach dem Zeitpunkt t0 liegenden Zeitpunkt t2 betrieben werden. Der z.B. zweistündige Betrieb der Beleuchtung ab dem Zeitpunkt t2 erfolgt dabei bis zum Zeitpunkt t3.

In einer zweiten Ausführungsform der Erfindung ist vorgesehen, die Betriebsleistung rampenförmig anzupassen. Eine derartige Ausgestaltung ist in Figur 1c dargestellt. Hierbei wird der Antrieb/Motor des Elektrofahrrads ebenfalls über den Zeitpunkt t0 hinaus betrieben, so dass das Elektrofahrrad eine größere Reichweite gegenüber der ungesteuerten Ausgestaltung gemäß der Figur 1a aufweist. Ab dem Zeitpunkt t4, bei dem der Antrieb/Motor abgestellt wird, wird die Betriebsleistung P der Beleuchtung rampenförmig bis zur Erreichung des Zeitpunkts t5 runtergefahren, z.B. zwei Stunden nach dem Zeitpunkt t4.

Selbstverständlich ist auch eine Kombination beider geänderter Betriebsleistungen der Beleuchtung möglich, z.B. indem zunächst eine gleichbleibende reduzierte Betriebsleistung vorgesehen ist, die nach einer gewissen Zeit, z.B. einer Stunde, rampenförmig weiter bis zu einer minimal-Leuchtstärke heruntergefahren wird. Eine derartige Steuerung trägt der üblicher Nutzung eines Fahrrads und besonders eines Elektrofahrrads Rechnung, da nach Abschalten des Antriebs/Motors und somit der Antriebsunterstützung üblicherweise vom Fahrer im Dunkel keine größere Strecke mehr zurückgelegt werden wird.

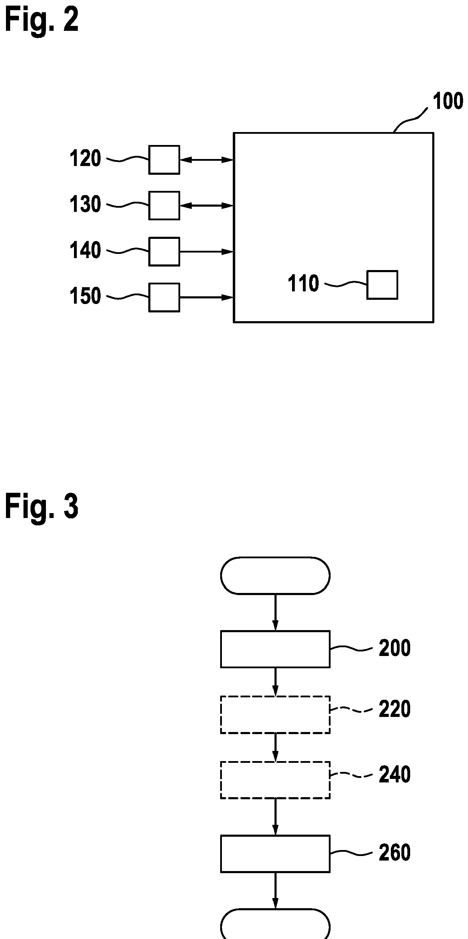

In dem Blockschaltbild der Figur 2 ist beispielhaft eine mögliche Ausgestaltung einer erfindungsgemäßen Vorrichtung dargestellt. Zentrale Einheit dieser Vorrichtung ist eine Steuereinheit 100, die einen Speicher 110 aufweist. Diese Steuereinheit 100 erfasst von einer Beleuchtung eines Elektrofahrrads, z.B. einem Frontscheinwerfer und/oder einem Rücklicht Daten, die zur Steuerung der Betriebsleistung der Beleuchtung relevant sind. Hierbei können beispielsweise die Aufnahmeleistung der Beleuchtung im Normalbetrieb, eine Verfügbarkeit der Leistungsreduzierung, eine Aufnahmeleistung bei Leistungsreduzierung oder weitere Kommunikationsdaten wie spezielle Ansteuermodi (z.B. Warnung, Hinweis) abgefragt werden. Neben kabelgebundenen Verbindungen zu den Beleuchtungselementen wie Scheinwerfer und Rücklicht besteht mittlerweile oft auch die Möglichkeit, die Datenverbindung zu diesen Beleuchtungselementen über Funk herzustellen, z.B. über Bluetooth. Ausgehend von den so erhaltenen Daten sowie der Information über die Abschaltung des Antriebs 140 bzw. eine direkte Ladeinformation des Energiespeichers 150 kann die Steuereinheit 100 die Betriebsleistung der Beleuchtung 120 reduzieren. Hierzu können im Speicher 110 geeignete Ansteuerroutinen abgelegt sein oder über eine Mensch-Maschine-Schnittstelle 130 (engl. Human-Machine-Interface HMI) vom Fahrer eingegeben oder initiiert werden. Das HMI 130 kann darüber hinaus auch dazu verwendet werden, den Fahrer über die Reduzierung der Beleuchtungsstärke der Beleuchtung zu informieren. Es ist auch möglich, dass der Fahrer zunächst auf das Abschalten des Antriebs 140 aufgrund geringer Restenergie des Energiespeichers 150 hingewiesen wird, so dass der Fahrer entscheiden kann, ob er eine Erhöhung der Reichweite oder eine Beibehaltung der Lichtstärke möchte.

Auch wenn üblicherweise bei einem Elektrofahrrad die Beleuchtung nicht regelmäßig geändert wird, kann es von Vorteil sein, die tatsächlich vorhandene Beleuchtung zu überprüfen, indem die aktuellen Daten der Beleuchtung in die Steuereinheit eingelesen werden. Optional kann auch vorgesehen sein, dass die Daten im Speicher 110 für die weitere Verwendung abgelegt werden und nur ab und zu oder zufällig überprüft wird, ob eine neue Beleuchtung an das Elektrofahrrad angebracht worden ist. Darüber hinaus kann auch vorgesehen sein, dass die Datenabfrage durch den Fahrer über das HMI initiiert wird, z.B. bei einem Wechsel des Beleuchtungselements und/oder des Leuchtmittels.

Mit dem Flussdiagramm der Figur 3 soll ein mögliches Verfahren zur Abfrage der Daten des Beleuchtungsmittels beschrieben werden. Hierbei können sowohl die Daten eines einzelnen Beleuchtungselements aber auch der gesamten Beleuchtung, bestehend aus mehreren Beleuchtungselementen abgefragt werden. Nach dem Start des Verfahrens werden im ersten Schritt 200 die Daten der Beleuchtung, z.B. einem Scheinwerfer und/oder einem Rücklicht erfasst, z.B. von der Steuereinheit 100. Hierbei kann die Erfassung kabelgebunden oder kabellos, z.B. per Funk erfolgen. Anschließend werden die so erfassten Daten im Schritt 260 für die weitere Verarbeitung gespeichert, z.B. im Speicher 110. Darüber hinaus kann basierend auf den erfassten Daten eine Ansteuerroutine zur Ansteuerung der Beleuchtung mit einer reduzierten Betriebsleistung abgespeichert werden.

Optional kann in einem frühen Schritt 220 vor der Speicherung erfasst werden, ob der Fahrer eine Reduzierung der Betriebsleistung der Beleuchtung und somit eine Reduzierung der Lichtstärke mit gleichzeitiger Reichweitenerhöhung wünscht. Ist das nicht der Fall, wird für die Beleuchtung keine Reduzierung der Leistung vorgesehen.

Weiterhin kann optional vor der Speicherung in einem Schritt 240 vorgesehen sein, einen Wert für die erforderliche Restenergie von Betriebsfällen zu berücksichtigen, die unabhängig von der Beleuchtung sind. Hierbei kann es sich beispielsweise um Notsituationen handeln, bei denen die Energie dies Energiespeichers für Notrufe oder für einen Notbetrieb vorgehalten werden soll. Da auch diese Restenergie für Notfälle die Abschaltung des Antriebs/Motors sowie die Restlaufzeit der Beleuchtung beeinflusst, kann die modifizierte Ansteuerung der Beleuchtung hierbei in Abhängigkeit dieser Restenergie berechnet werden.

Neben den bereits beschriebenen Ansteuerungsmöglichkeiten der Beleuchtung kann eine individuelle Anpassung der Beleuchtungsstärke bzw. der Beleuchtungsleistung sowohl im Normalbetrieb als auch im leistungsreduzierten Betrieb durch den Fahrer erfolgen (z.B. im Schritt 220). Weiterhin können spezielle Betriebsmodi wie ein Blinker, eine Anpassung in Abhängigkeit der Umgebungsbeleuchtung, ein automatisches Licht, ein Tagfahrlicht berücksichtigt werden (z.B. im Schritt 240).

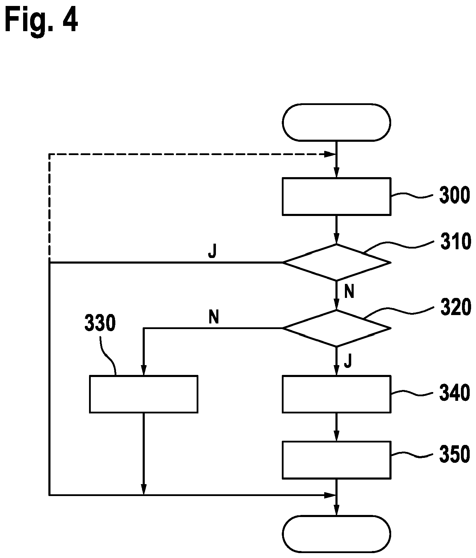

Eine Steuerung der Beleuchtung, wie es in den vorstehenden Ausführungen allgemein beschrieben wird, wird im nachfolgenden anhand des Flussdiagramm in Figur 4 ausgeführt. Hierbei wird nach dem Start des Verfahren im ersten Schritt 300 die Restenergie bzw. Restkapazität des Energiespeichers 150 erfasst, z.B. eines Akkumulators oder einer Batterie. Anschließend wird im Schritt 310 überprüft, ob die Restkapazität des Energiespeichers einen z.B. zweistündigen Betrieb der Beleuchtung im Normalbetrieb erlaubt. Ist das der Fall, wird das Verfahren beendet oder erneut mit dem Schritt 300 durchlaufen.

Ansonsten wird im nächsten Schritt 320 geprüft, ob eine Möglichkeit zur Reduzierung der Betriebsleistung möglich ist. Ist aufgrund der erfassten Daten von der Beleuchtung 120 oder der im Speicher 110 abgelegten Informationen eine Reduzierung der Betriebsleistung nicht möglich, wird in einem Schritt 330 der Antrieb bzw. Motor des Elektrofahrrads abgeschaltet und die Beleuchtung im Normalbetrieb wenigstens zwei Stunden betrieben, bevor das Verfahren beendet wird. Ist jedoch eine Reduzierung der Betriebsleistung möglich, z.B. durch eine Reduzierung der Leuchtstärke, so wird im nächsten Schritt 340 die Beleuchtung entsprechend der vorher festgelegten Ansteuerroutine oder einer noch gesondert festzulegenden Ansteuerung derart angesteuert, dass eine im Mittel reduzierte Betriebsleistung erforderlich ist. Diese reduzierte mittlere Betriebsleistung kann im nächsten Schritt 350 dazu genutzt werden, den Betrieb des Antrieb bzw. des Motors des Elektrofahrrads länger aufrecht zu erhalten, um so eine Reichweitenerhöhung zu ermöglichen. Die genauere Abschaltautomatik des Antriebs wird dabei in Abhängigkeit des gewählten Ansteuermodus der Beleuchtung festgelegt (siehe die Ausführungen zu den Ausführungsbeispielen der Figuren 1b und 1c sowie einer Kombination daraus). Anschließend kann das Verfahren beendet werden.

## Patentansprüche

1. Verfahren zur Steuerung wenigstens eines Beleuchtungselements (120) eines Elektrofahrrads, insbesondere zur Steuerung der Betriebsleistung des wenigstens einen Beleuchtungselementes (120),
wobei das Verfahren wenigstens
• eine Betriebsinformation des Beleuchtungselements (120) erfasst, und
• eine Abschaltinformation erfasst, die die Abschaltung des Antriebs (140) des Elektrofahrrads repräsentiert, und
• in Abhängigkeit der Betriebsinformation und der Abschaltinformation eine Reduzierung der Betriebsleistung des Beleuchtungselements (120) vornimmt.

2. Verfahren nach Anspruch 1, **dadurch gekennzeichnet, dass** als Abschaltinformation eine Information erfasst wird, die die Abschaltung des Antriebs (140) aufgrund einer nicht ausreichenden Beladung des Energiespeichers (150) zum parallelen Betrieb des Antriebs (140) und des wenigstens einen Beleuchtungselements während einer vorgebbaren Zeit repräsentiert.

3. Verfahren nach Anspruch 1 oder 2, **dadurch gekennzeichnet, dass** zur Erfassung der Abschaltinformation die Beladung eines Energiespeichers (150) erfasst wird, mittels dem der Antrieb (140) des Elektrofahrrads betrieben wird.

4. Verfahren nach einem der vorhergehenden Ansprüche, **dadurch gekennzeichnet, dass** die Betriebsleistung des Beleuchtungselements (120) linear reduziert wird, wobei insbesondere vorgesehen ist, dass die Betriebsleistung zunächst auf einen im Wesentlichen stabilen Leistungswert und nach einer vorgegebenen oder wählbaren Zeitspanne linear reduziert wird.

5. Verfahren nach einem der vorhergehender Ansprüche, **dadurch gekennzeichnet, dass** das wenigstens eine Beleuchtungselement (120) wenigstens zwei Leuchtmittel aufweist, wobei durch eine Abschaltung wenigstens eines Leuchtmittels eine Reduzierung der Betriebsleistung erreicht wird.

6. Verfahren nach einem der vorhergehen Ansprüche, **dadurch gekennzeichnet, dass** der Antrieb (140) nach der Reduzierung der Betriebsleistung des Beleuchtungselements (120) weiter betrieben wird, wobei insbesondere vorgesehen ist, dass die Zeitdauer des weiterführenden Betriebs des Antriebs (140) in Abhängigkeit von der mittleren Reduzierung der Betriebsleistung des wenigstens einen Beleuchtungselements (120) innerhalb einer vorgebbaren Zeit erfolgt.

7. Verfahren nach einem der vorhergehenden Ansprüche, **dadurch gekennzeichnet dass** das Verfahren vom Fahrer des Elektrofahrrads
• den Absolut- oder Relativbetrag der Reduzierung der Betriebsleistung, und/oder
• die vorgebbare Zeit, während der das wenigstens eine Beleuchtungselement (120) nach Abschaltung des Antriebs (140) noch betreibbar ist, und/oder
• die Zeitspanne, während der die Betriebsleistung auf einen konstanten Wert wird,
erfasst.

8. Vorrichtung zur Steuerung wenigstens eines Beleuchtungselements (120) eines Elektrofahrrads, insbesondere zur Steuerung der Betriebsleistung des wenigstens einen Beleuchtungselementes (120), mit einer Steuereinheit (100) zur Durchführung eines der Verfahren nach Anspruch 1 bis 7, wobei die Steuereinheit (100) wenigstens
• eine Betriebsinformation des Beleuchtungselements (120) erfasst, und
• eine Abschaltinformation erfasst, die die Abschaltung des Antriebs (140) des Elektrofahrrads repräsentiert, und
• in Abhängigkeit der Betriebsinformation und der Abschaltinformation eine Reduzierung der Betriebsleistung des Beleuchtungselements (120) vornimmt.

9. Vorrichtung nach Anspruch 8, **dadurch gekennzeichnet, dass** die Steuereinheit (100) als Abschaltinformation eine Information erfasst, die die Abschaltung des Antriebs (140) aufgrund einer nicht ausreichenden Beladung des Energiespeichers (150) zum parallelen Betrieb des Antriebs (140) und des wenigstens einen Beleuchtungselements während einer vorgebbaren Zeit repräsentiert, wobei insbesondere vorgesehen ist, dass die Steuereinheit (100) zur Erfassung der Abschaltinformation die Beladung eines Energiespeichers (150) erfasst, mittels dem der Antrieb (140) des Elektrofahrrads betrieben wird.

10. Vorrichtung nach einem der vorhergehenden Ansprüche 8 oder 9, **dadurch gekennzeichnet, dass** die Steuereinheit (100) die Betriebsleistung des Beleuchtungselements (120) linear reduziert, wobei insbesondere vorgesehen ist, dass die Steuereinheit (100) die Betriebsleistung zunächst auf einen stabilen Leistungswert und nach einer vorgegebenen oder wählbaren Zeitspanne linear reduziert.

11. Vorrichtung nach einem der vorhergehen Ansprüche 8 bis 10, **dadurch gekennzeichnet, dass** die Steuereinheit (100) den Antrieb (140) nach der Reduzierung der Betriebsleistung des Beleuchtungselements (120) weiter betreibt, wobei insbesondere vorgesehen ist, dass die Zeitdauer des weiterführenden Betriebs des Antriebs (140) in Abhängigkeit von der mittleren Reduzierung der Betriebsleistung des wenigstens einen Beleuchtungselements (120) innerhalb einer vorgebbaren Zeit erfolgt.
